# EUROPÄISCHE PATENTANMELDUNG

(11) **EP 4 015 315 A1**
(43) Veröffentlichungstag der Anmeldung: **22.06.2022**
(21) Anmeldenummer: 21208655.7
(22) Anmeldetag: 17.11.2021
(51) Int. Cl.: B60R 19/18

(54) **VERKLEIDUNGSTEIL FÜR EINEN STOSSFÄNGER EINES KRAFTFAHRZEUGS**

(30) Priorität: 16.12.2020 DE 202020107273 U
(71) Anmelder: REHAU Automotive SE & Co. KG, 95111 Rehau (DE)
(72) Erfinder: Doss, Felix, 95445 Bayreuth (DE)

(57) **Zusammenfassung**

Die Erfindung betrifft ein Verkleidungsteil für einen Stoßfänger (B) eines Kraftfahrzeugs, umfassend einen schalenförmigen Verkleidungsgrundkörper (1) mit einer Wandstärke und mit einer, bei bestimmungsgemäßer Verwendung, sichtbaren Außenseite (A), und eine der Außenseite gegenüberliegenden Innenseite (I), wobei der Verkleidungsgrundkörper (1) dafür vorgesehen ist, vor einem Aufprallenergie absorbierenden Stoßfänger (B) des Kraftfahrzeugs angeordnet zu sein, wobei von dem Verkleidungsgrundkörper (1) zwei nebeneinander und einstückig mit dem Verkleidungsgrundkörper (1) ausgeformte Zungen (2, 3) von der Innenseite (I) weg nach Innen abstehen, wobei die beiden Zungen (2, 3) beabstandet zueinander angeordnet sind, und die freien Enden (4, 5) der beiden Zungen (2, 3) sich mit einem Abstand (X) gegenüberliegend ausgebildet sind.

## Beschreibung

Die vorliegende Erfindung betrifft ein Verkleidungsteil für einen Stoßfänger eines Kraftfahrzeugs, umfassend einen schalenförmigen Verkleidungsgrundkörper mit einer Wandstärke und mit einer, bei bestimmungsgemäßer Verwendung, sichtbaren Außenseite, und eine der Außenseite gegenüberliegenden Innenseite, wobei der Verkleidungsgrundkörper dafür vorgesehen ist, vor einem Aufprallenergie absorbierenden Stoßfänger des Kraftfahrzeugs angeordnet zu sein.

Stoßfänger an einem Kraftfahrzeug sind Aufprallenergie absorbierende Strukturen, die dann zum Einsatz kommen sollen, wenn relativ viel Energie abgebaut werden muss, um den oder die Insassen eines Kraftfahrzeuges zu schützen. Wenn derartige Stoßfänger verformt werden sind Reparaturen an dem Kraftfahrzeug mit hohen Kosten verbunden. Daher wird ein Kraftfahrzeug so ausgelegt, das bei Bagatellschäden (wie beispielsweise Parkremplern) nur das Verkleidungsteil die Aufprallenergie absorbieren soll. Bei aus dem Stand der Technik bekannten Verkleidungsteilen ist dafür zwischen dem Verkleidungsgrundkörper und dem Stoßfänger ein zusätzlicher sogenannter Prallschaum angeordnet, der diese geringeren Aufprallenergien aufnehmen soll, bevor der Stoßfänger verformt wird. Dies bringt den Nachteil mit sich, dass ein zusätzliches Bauteil notwendig ist, was in der Konfektion und auch in der Montage des Verkleidungsteils einen erhöhten Zeitaufwand bedeutet.

Die Erfindung stellt sich daher die Aufgabe ein Verkleidungsteil mit den eingangs beschriebenen Merkmalen anzugeben, das gegenüber dem Stand der Technik einfacher im Verbau am Kraftfahrzeug ist.

Erfindungsgemäß wird diese Aufgabe gelöst durch ein Verkleidungsteil für einen Stoßfänger eines Kraftfahrzeugs, umfassend:
- einen schalenförmigen Verkleidungsgrundkörper mit einer Wandstärke und mit einer, bei bestimmungsgemäßer Verwendung, sichtbaren Außenseite,
- eine der Außenseite gegenüberliegenden Innenseite,
   wobei der Verkleidungsgrundkörper dafür vorgesehen ist, vor einem Aufprallenergie absorbierenden Stoßfänger des Kraftfahrzeugs angeordnet zu sein,
   wobei von dem Verkleidungsgrundkörper zwei nebeneinander und einstückig mit dem Verkleidungsgrundkörper ausgeformte Zungen von der Innenseite weg nach Innen abstehen,
   wobei die beiden Zungen beabstandet zueinander angeordnet sind, und die freien Enden der beiden Zungen sich mit einem Abstand gegenüberliegend ausgebildet sind.

Die freien Enden können so ausgebildet und dimensioniert sein, dass diese sich, bei bestimmungsgemäßer Verwendung des Verkleidungsteils am Kraftfahrzeug, in Folge einer auf den Verkleidungsgrundkörper bei einem Aufprall einwirkenden Kraft, am Stoßfänger abgleiten und hierdurch aufeinander zu bewegen können, sodass nach Erreichen einer Bagatellverformung des Verkleidungsgrundkörpers sich die Enden der Zungen berühren und der Verformungswiderstand des Verkleidungsgrundkörpers ansteigt. Bagatellverformung meint, dass bis zum Erreichen dieses Verformungsgrades des Verkleidungsgrundkörpers nur geringe Kräfte auf den Stoßfänger übertragen wurden. Dies ist insbesondere bei einem Parkrempler der Regelfall, da hier die insgesamt aufzunehmenden Kräfte relativ gering sind. Der Vorteil der Erfindung liegt darin, dass aufgrund der einstückigen Ausbildung der Zungen mit dem Verkleidungsgrundkörper kein zusätzlicher Prallschaum notwenig ist. Darüber hinaus erlaubt die Konstruktion und Anordnung der Zungenenden es, dass nach Überschreiten einer Bagatellverformung der Verkleidungsgrundkörper seinen Verformungswiderstand erhöht und weitere Energie durch das Verformen und die Zerstörung der Zungen abgebaut wird, bevor Energie im Stoßfänger abgebaut werden muss.

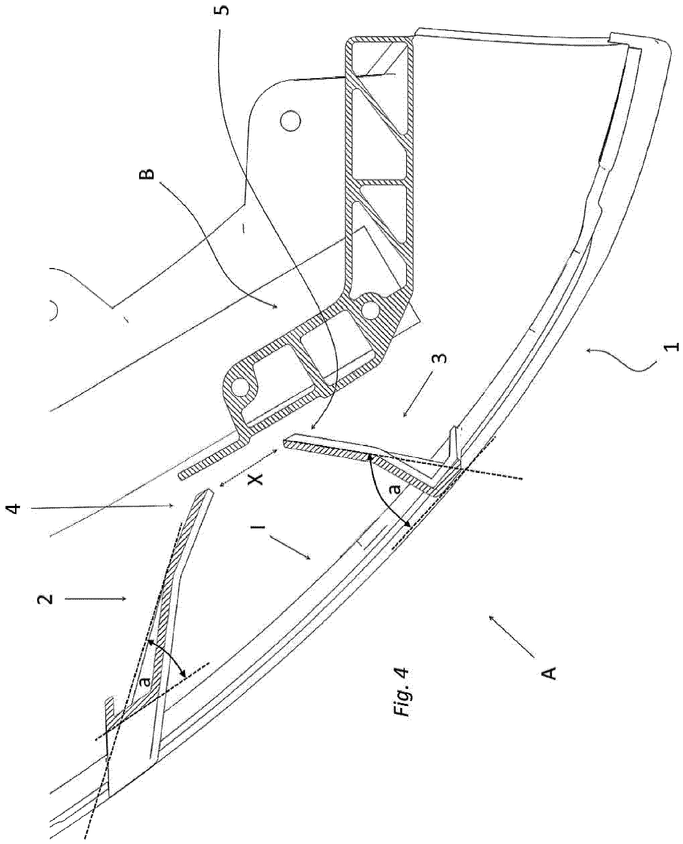

Die Endabschnitte der Zungen können jeweils in einem Winkel zwischen 25° und 75°, bevorzugt 35° und 60°, weiter bevorzugt 40° und 55° zu der Innenseite geneigt sein. Die Bestimmung des Winkels kann der Figur 4 des Ausführungsbeispiels entnommen werden. Auf einer der Zungen oder auf beiden Zungen kann wenigstens eine Stützrippe angeordnet sein. Durch die Dicke und Dimensionierung der Stützrippe kann die Federsteifigkeit der Zungen während der Konstruktionsphase in einem weiten Bereich variiert und angepasst werden. Zudem erhöht die Stützrippe den Wert der Energie, die über die Zungen absorbiert werden kann.

Die Zungen können im Verlauf ihrer Längserstreckungssrichtung wenigstens einmal in sich abgewinkelt ausgebildet sein. Hierdurch ergibt sich eine verbesserte Zuverlässigkeit der Einleitung des Gleitens der Zungen auf dem Stoßfänger.

Der Verkleidungsgrundkörper kann aus einem thermoplastischen Material besteht, das Polypropylen (PP), insbesondere PP mit Talkum oder PP-EPDM, umfasst.

Das Verkleidungsteil kann eine Stoßfängerverkleidung oder ein Teil einer Stoßfängerverkleidung oder ein Trägerteil einer Stoßfängerverkleidung sein.

Die Erfindung betrifft ferner eine Verkleidungsanordnung bestehend aus einem Verkleidungsteil nach einem der Ansprüche1 bis 7 oder wie vorstehend beschrieben und einem hinter dem Verkleidungsteil angeordneten Stoßfänger.

Teil der Erfindung ist ferner ein Kraftfahrzeug mit einem vorstehend beschriebenen Verkleidungsteil, insbesondere nach einem der Ansprüche 1 bis 7, oder mit einer Verkleidungsanordnung nach Anspruch 8.

### Ausführungsbeispiele

Im Folgenden wird die Erfindung anhand einer lediglich ein Ausführungsbeispiel darstellenden Zeichnung erläutert. Es zeigen schematisch:
Fig. 1 eine perspektivische Darstellung einer erfindungsgemäßen Verkleidungsanordnung;

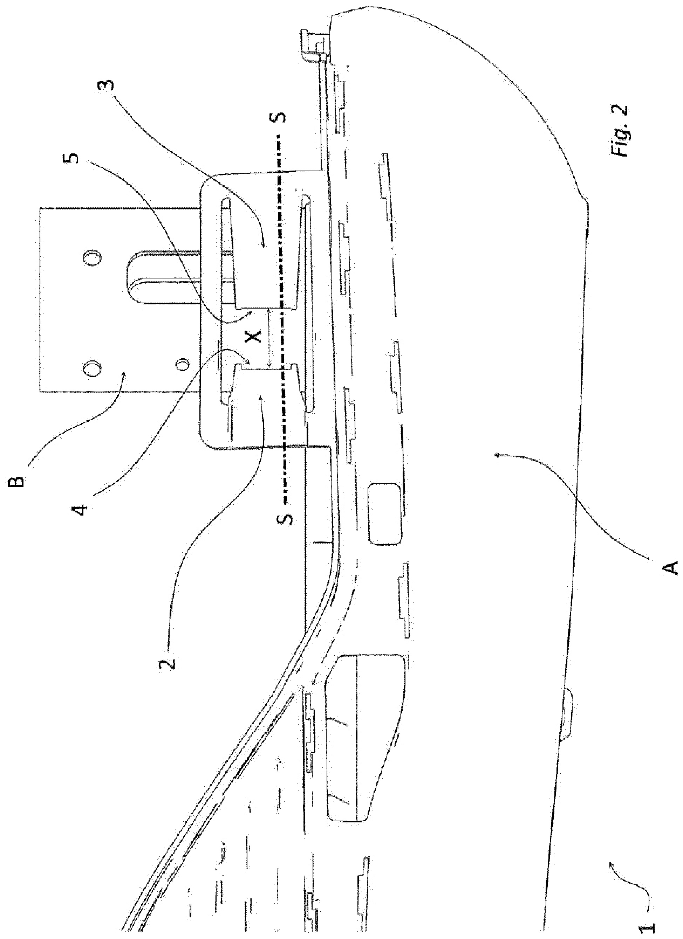

Fig. 2 eine Detailansicht der Verkleidungsanordnung;
Fig. 3 eine Ansicht der Innenseite des erfindungsgemäßen Verkleidungsteils;
Fig. 4 eine Querschnittsdarstellung gemäß der Schnittlinie S-S aus Fig. 2;
Fig. 5 eine Detaildraufsicht auf die Verkleidungsanordnung in bestimmungsgemäßer Verwendung;
Fig. 6 Detaildraufsicht gemäß Fig. 5 nach Einleitung einer Kraft F.

In den Figuren werden gleiche oder funktionsgleiche Elemente mit den gleichen Bezugszeichen versehen.

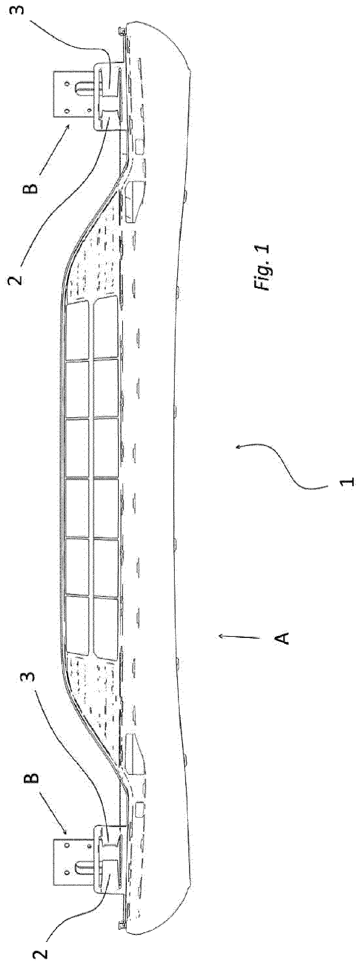

Die Fig. 1 zeigt ein Verkleidungsteil für einen Stoßfänger B eines Kraftfahrzeugs, umfassend:
- einen schalenförmigen Verkleidungsgrundkörper 1 mit einer Wandstärke und mit einer, bei bestimmungsgemäßer Verwendung, sichtbaren Außenseite A,
- eine der Außenseite gegenüberliegenden Innenseite I,
wobei der Verkleidungsgrundkörper 1 dafür vorgesehen ist, vor einem Aufprallenergie absorbierenden Stoßfänger B des Kraftfahrzeugs angeordnet zu sein.
Von dem Verkleidungsgrundkörper 1 stehen zwei nebeneinander und einstückig mit dem Verkleidungsgrundkörper 1 ausgeformte Zungen 2, 3 von der Innenseite I weg nach Innen ab.
Die beiden Zungen 2, 3 sind beabstandet zueinander angeordnet, und die freien Enden 4, 5 der beiden Zungen 2, 3 sind sich mit einem Abstand X gegenüberliegend ausgebildet.

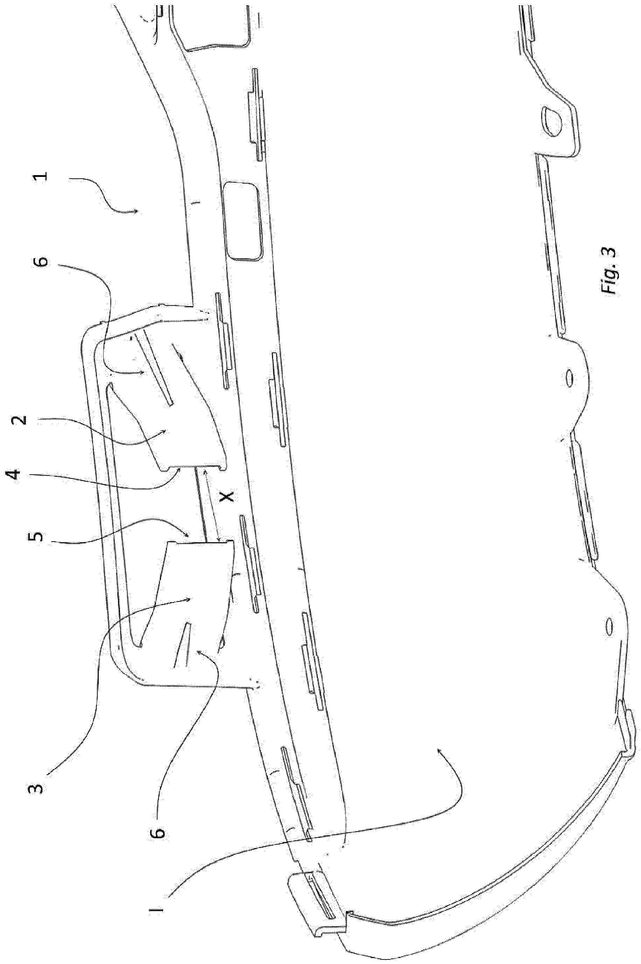

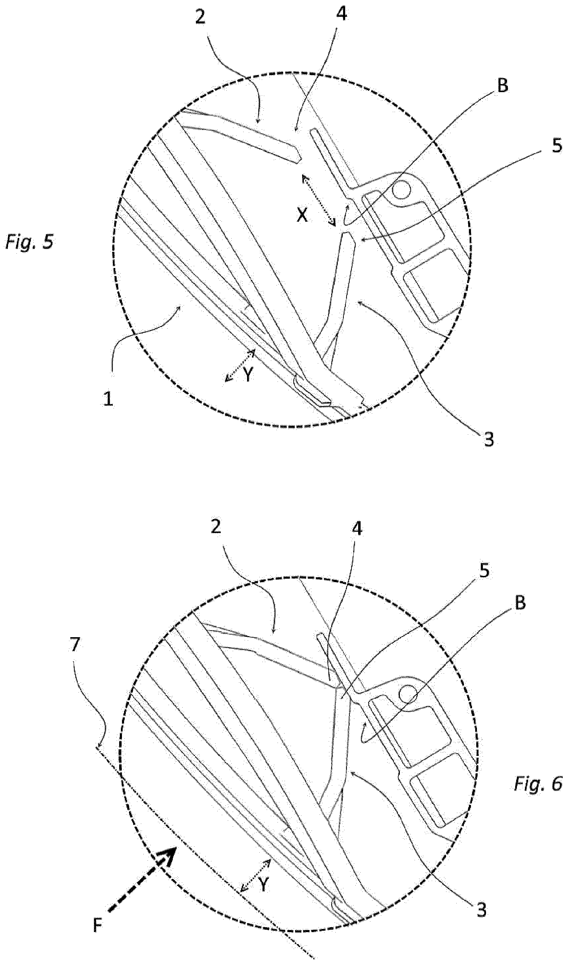

Die freien Enden 4, 5 sind so ausgebildet und dimensioniert, dass sich diese, bei bestimmungsgemäßer Verwendung des Verkleidungsteils am Kraftfahrzeug, in Folge einer auf den Verkleidungsgrundkörper 1 bei einem Aufprall einwirkenden Kraft F, am Stoßfänger B abgleiten und hierdurch aufeinander zu bewegen können, sodass nach Erreichen einer Bagatellverformung Y des Verkleidungsgrundkörpers 1 sich die Enden 4, 5 der Zungen 2, 3 berühren und der Verformungswiderstand des Verkleidungsgrundkörpers 1 ansteigt.
In der Fig. 4 ist erkennbar, dass die Endabschnitte der Zungen 2, 3 jeweils in einem Winkel a zwischen 25° und 75° zu der Innenseite I geneigt sind.
In der Rückansicht nach Fig. 3, also der Ansicht auf die Innenseite des Verkleidungsgrundkörpers, ist erkennbar, dass auf beiden Zungen 2, 3 wenigstens eine Stützrippe 6 angeordnet ist.
Insbesondere in Fig. 4 ist erkennbar, dass die Zungen 2, 3 im Verlauf ihrer Längserstreckungssrichtung in sich wenigstens einmal abgewinkelt ausgebildet sind.
Der Verkleidungsgrundkörper 1 besteht aus einem thermoplastischen Material, das Polypropylen (zum Beispiel PP-T20 oder PP-EPDM) umfasst.
Das Verkleidungsteil ist ein Teil einer Stoßfängerverkleidung oder ein Trägerteil einer Stoßfängerverkleidung.
Insbesondere in den Fig. 1 und Fig. 5 ist die erfindungsgemäße Verkleidungsanordnung bestehend aus einem Verkleidungsteil und einem hinter dem Verkleidungsteil angeordneten Stoßfänger B ersichtlich.

## Patentansprüche

1. Verkleidungsteil für einen Stoßfänger (B) eines Kraftfahrzeugs, umfassend:
- einen schalenförmigen Verkleidungsgrundkörper (1) mit einer Wandstärke und mit einer, bei bestimmungsgemäßer Verwendung, sichtbaren Außenseite (A),
- eine der Außenseite gegenüberliegenden Innenseite (I),
wobei der Verkleidungsgrundkörper (1) dafür vorgesehen ist, vor einem Aufprallenergie absorbierenden Stoßfänger (B) des Kraftfahrzeugs angeordnet zu sein,
**dadurch gekennzeichnet, dass**
von dem Verkleidungsgrundkörper (1) zwei nebeneinander und einstückig mit dem Verkleidungsgrundkörper (1) ausgeformte Zungen (2, 3) von der Innenseite (I) weg nach Innen abstehen,
wobei die beiden Zungen (2, 3) beabstandet zueinander angeordnet sind, und die freien Enden (4, 5) der beiden Zungen (2, 3) sich mit einem Abstand (X) gegenüberliegend ausgebildet sind.

2. Verkleidungsteil nach Anspruch 1, **dadurch gekennzeichnet, dass** die freien Enden (4, 5) so ausgebildet und dimensioniert sind, dass diese sich, bei bestimmungsgemäßer Verwendung des Verkleidungsteils am Kraftfahrzeug, in Folge einer auf den Verkleidungsgrundkörper (1) bei einem Aufprall einwirkenden Kraft (F), am Stoßfänger (B) abgleiten und hierdurch aufeinander zu bewegen können, sodass nach Erreichen einer Bagatellverformung (Y) des Verkleidungsgrundkörpers (1) sich die Enden (4, 5) der Zungen (2, 3) berühren und der Verformungswiderstand des Verkleidungsgrundkörpers (1) ansteigt.

3. Verkleidungsteil nach einem der vorstehenden Ansprüche, **dadurch gekennzeichnet, dass** die Endabschnitte der Zungen (2, 3) jeweils in einem Winkel (a) zwischen 25° und 75° zu der Innenseite (I) geneigt sind.

4. Verkleidungsteil nach einem der vorstehenden Ansprüche **dadurch gekennzeichnet, dass** auf einer der Zungen (2, 3) oder auf beiden Zungen (2, 3) wenigstens eine Stützrippe (6) angeordnet ist.

5. Verkleidungsteil nach einem der vorstehenden Ansprüche, **dadurch gekennzeichnet, dass** die Zungen (2, 3) im Verlauf ihrer Längserstreckungssrichtung in sich wenigstens einmal abgewinkelt ausgebildet sind.

6. Verkleidungsteil nach einem der vorstehenden Ansprüche, **dadurch gekennzeichnet, dass** der Verkleidungsgrundkörper (1) aus einem thermoplastischen Material besteht, das Polypropylen umfasst.

7. Verkleidungsteil nach einem der vorstehenden Ansprüche, **dadurch gekennzeichnet, dass** das Verkleidungsteil eine Stoßfängerverkleidung oder ein Teil einer Stoßfängerverkleidung oder ein Trägerteil einer Stoßfängerverkleidung ist.

8. Verkleidungsanordnung bestehend aus einem Verkleidungsteil nach einem der vorstehenden Ansprüche und einem hinter dem Verkleidungsteil angeordneten Stoßfänger (B).

9. Kraftfahrzeug mit einem Verkleidungsteil nach einem der Ansprüche 1 bis 7 oder mit einer Verkleidungsanordnung nach Anspruch 8.
